# EUROPÄISCHE PATENTSCHRIFT

(11) **EP 0 718 547 B1**
(45) Veröffentlichungstag und Bekanntmachung des Hinweises auf die Patenterteilung: **20.10.2004**
(21) Anmeldenummer: 95118602.2
(22) Anmeldetag: 25.11.1995
(51) Int. Cl.: F21S 11/00, F21V 8/00

(54) **Tageslicht-Beleuchtungsvorrichtung bestehend aus mindestens einer lichtleitenden Platte**
Daylight illumination apparatus comprising at least a light conducting slab
Dispositif d'éclairage diurne comprenant au moins une plaque en matérial conducteur de lumière

(30) Priorität: 26.11.1994 DE 4442228
(43) Veröffentlichungstag der Anmeldung: 26.06.1996
(73) Patentinhaber: Müller, Helmut Frank Ottomar, Prof. Dr.-Ing., D-50933 Köln (DE)
(72) Erfinder: Müller, Helmut Frank Ottomar, Prof. Dr.-Ing., D-50933 Köln (DE); Gutjahr, Jörg, Prof. Dr., D-51588 Nümbrecht (DE)
(74) Vertreter: Selting, Günther, Dipl.-Ing.

(56) Entgegenhaltungen:
- EP-A- 0 609 133
- AU-B- 601 634
- DE-A- 4 038 500
- DE-C- 173 895
- US-A- 4 557 565

## Beschreibung

Die Erfindung betrifft eine Tageslicht-Beleuchtungsvorrichtung bestehend aus mindestens einer lichtleitenden Platte.

Eine Tageslicht-Beleuchtungsvorrichtung, von der der Oberbegriff des Patentanspruchs 1 ausgeht, ist bekannt aus EP 0 524 388 A2. Diese Vorrichtung weist eine Scheibe auf, welche Hologramme trägt, die aus einem horizontalen Einfalls-Winkelbereich einfallendes Licht auf einen schmaleren horizontalen Ausfalls-Winkelbereich konzentrieren. Hinter den Hologrammen sind Lichtleitelemente angeordnet, die eine Höhenablenkung des einfallenden Lichts bewirken. Diese Lichtleitelemente bestehen aus lichtleitenden Platten, die mit einer Stirnfläche dem einfallenden Licht zugewandt sind, während die gegenüberliegende Stirnfläche dem zu beleuchtenden Raum zugewandt ist. Zwischen beiden Stirnflächen haben die Platten einen bogenförmigen Verlauf. Die genannten Stirnflächen sind ebenflächig.

Der Erfindung liegt die Aufgabe zugrunde, eine Tageslicht-Beleuchtungsvorrichtung der im Oberbegriff des Patentanspruchs 1 angegebenen Art zu schaffen, deren lichtlenkende Eigenschaften verbessert sind und die das einfallende Licht gezielter in den zu beleuchtenden Raum lenkt und dadurch eine bessere Raumbeleuchtung ermöglicht.

Die Lösung dieser Aufgabe erfolgt erfindungsgemäß mit den Merkmalen gemäß Patentanspruch 1.

Bei der erfindungsgemäßen Tageslicht-Beleuchtungsvorrichtung haben die Platten an der ersten Stirnfläche eine strahlbündelnde Krümmung. Diese Krümmung bewirkt eine Fokussierung des parallel einfallenden Lichts im Platteninnern. Durch Totalreflexion an der einen Plattenwand bzw. durch Mehrfachreflexion wird das Licht stärker gebündelt in den Raum eingeleitet. Bei flachem Lichteinfall wird ein großer Teil des Lichts gezielt in die Höhe abgelenkt und somit relativ steil gegen die Raumdecke gelenkt. Bei steiler einfallendem Licht wird ein großer Teil dieses Lichts dagegen flach in den Raum geleitet, um in größerer Raumtiefe die Decke zu beleuchten. Durch die strahlbündelnde Krümmung wird ein Fokussierungseffekt hervorgerufen, der das Bündelverhalten des ausfallenden Lichts wesentlich verbessert.

Gemäß einer bevorzugten Ausführungsform der Erfindung weist die zweite Stirnfläche der Platten eine Profilierung auf. Dies bedeutet, daß die zweite Stirnfläche, an der das Licht austritt, nicht ebenflächig ist, sondern Erhöhungen und Vertiefungen hat. Durch solche Erhöhungen und Vertiefungen wird die Lichtlenkung in azimutaler Richtung verbessert, ohne daß dies durch andere lichtlenkende Vorrichtungen, z.B. Hologramme, geschehen müßte. Die Profilierung ist vorzugsweise eine regelmäßige Profilierung und insbesondere eine sinusförmige Profilierung. Durch eine reine sinusförmige oder annähernd sinusförmige Profilierung wird erreicht, daß Licht, das schräg unter einem Azimutwinkel einfällt, zum Lot der Stirnfläche hin gebrochen wird. Dagegen wird Licht, das im Azimut rechtwinklig auf die erste Stirnfläche auftritt, von der zweiten Stirnfläche breit gestreut.

Die erfindungsgemäße Tageslicht-Beleuchtungsvorrichtung ist zwar lichtdurchlässig, jedoch nicht durchsichtig. Sie eignet sich für Lichtöffnungen in Außenwänden und Dächern von Gebäuden. Bei Anordnung in Außenwänden wird insbesondere eine horizontale Lichtlenkung in die Raumtiefe bezweckt, bei Anordnung in Dächern eine vertikale Lichtlenkung über große bzw. mehrgeschossige Raumhöhen. Die lichtleitenden Platten der Vorrichtung, die vorzugsweise zwischen zwei durchsichtigen Scheiben eingefaßt sind, können in Abhängigkeit vom Einbauort und der Haupteinfallsrichtung des Sonnenlichts unterschiedliche Formen und Krümmungen zwischen der ersten und der zweiten Stirnfläche aufweisen.

Im folgenden werden unter Bezugnahme auf die Zeichnungen Ausführungsbeispiele der Erfindung näher erläutert.

Es zeigen:
- Fig. 1: den Querschnitt einer lichtleitenden Platte mit einer Darstellung des Lichtweges bei flach einfallendem Licht,
- Fig. 2: die gleiche Platte wie in Fig. 1 bei steil einfallendem Licht,
- Fig. 3: eine Draufsicht auf Fig. 2 aus Richtung des Pfeiles III bei Licht, das unter schrägem Azimutwinkel einfällt,
- Fig. 4: eine Draufsicht der Platte bei Licht, das im Azimut senkrecht auf den ersten Plattenrand auftrifft,
- Fig. 5: eine Anordnung von Platten zwischen zwei Scheiben,
- Fig. 6: ein Fenster, dessen oberer Bereich eine Plattenanordnung enthält, und
- Fign. 7-9: verschiedene Einbausituationen der Tageslicht-Beleuchtungsvorrichtung.

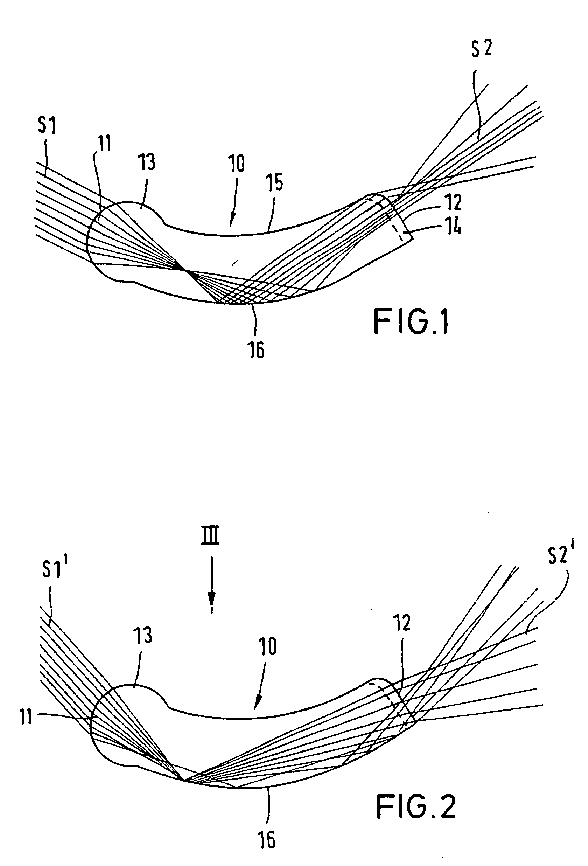

In den Figuren 1 und 2 ist jeweils die gleiche Platte 10 dargestellt, die aus lichtleitendem Material besteht. Das Plattenmaterial kann Glas, Acrylglas oder ein ähnliches Material sein, das lichtdurchlässig ist, jedoch einen Brechungsindex hat, der größer ist als 1. Die Platte 10 ist nach Art einer langgestreckten Lamelle gestaltet, die nach unten gebogen ist und zwei parallele Stirnflächen 11,12 aufweist. Die erste Stirnfläche 11 ist dem einfallenden Licht zugewandt und die zweite Stirnfläche 12 bildet das Austrittsende, aus dem das Licht aus der Platte 10 austritt. Die Platte 10 ist insgesamt horizonal angeordnet, d.h. ihre Stirnflächen 11,12 liegen auf etwa gleicher Höhe. Die Stärke der Platte beträgt zwischen 4 und 5 mm und ihre Breite etwa 20 mm. Zwischen den Stirnflächen 11,12 ist die Platte 10 bogenförmig nach unten durchgebogen, wobei der Biegeradius etwa 14 mm beträgt.

Die erste Stirnfläche 11 ist als strahlbündelnde Krümmung 13 ausgebildet. Bei dem vorliegenden Ausführungsbeispiel hat die Krümmung 13 die Form eines teilzylindrischen Kopfes mit einem Radius von 2,5 mm, d.h. die Platte 10 ist im Bereich der Krümmung 13 dicker als in den übrigen Bereichen.

Die zweite Stirnfläche 12 ist in der Schnittdarstellung von Fig. 1 eben, jedoch ist er mit einer in Längsrichtung der Platte 10 variierenden Profilierung 14 versehen. Die Oberseite 15 der Platte 10 und die Unterseite 16 haben kreisbogenförmigen Verlauf.

Die Lichtstrahlung S1, die gemäß Fig. 1 unter einem relativ flachen Höhenwinkel einfällt, wird von der ersten Stirnfläche 11 im Innern der Platte 10 fokussiert und anschließend an der Unterseite 16 totalreflektiert. Die reflektierte Lichtstrahlung tritt dann entweder direkt oder nach weiteren Reflexionen aus der zweiten Stirnfläche 12 aus. Man erkennt, daß ein großer Teil der austretenden Lichtstrahlung S2 relativ steil in Richtung auf die Höhe des zu beleuchtenden Raumes gerichtet ist.

Fig. 2 zeigt den Fall, daß die einfallende Lichtstrahlung S1' unter einem relativ steilen Höhenwinkel einfällt, wie es bei hohem Sonnenstand der Fall ist. Die Linsenwirkung der ersten Stirnfläche 11 bewirkt eine Fokussierung in der Nähe der Unterseite 16 der Platte 10. Die Lichtstrahlung wird im Bereich des Brennpunktes totalreflektiert und verläßt die Platte 10 durch die zweite Stirnfläche 12, nachdem ein Teil der Lichtstrahlung zuvor an der Unterseite 16 noch einmal reflektiert wurde. Der größte Teil der austretenden Lichtstrahlung S2' wird relativ flach in den zu beleuchtenden Raum geleitet und bewirkt die Ausleuchtung dieses Raumes in der Tiefe, d.h. die Lichtstrahlung S2' dringt tief in den Raum hinein vor.

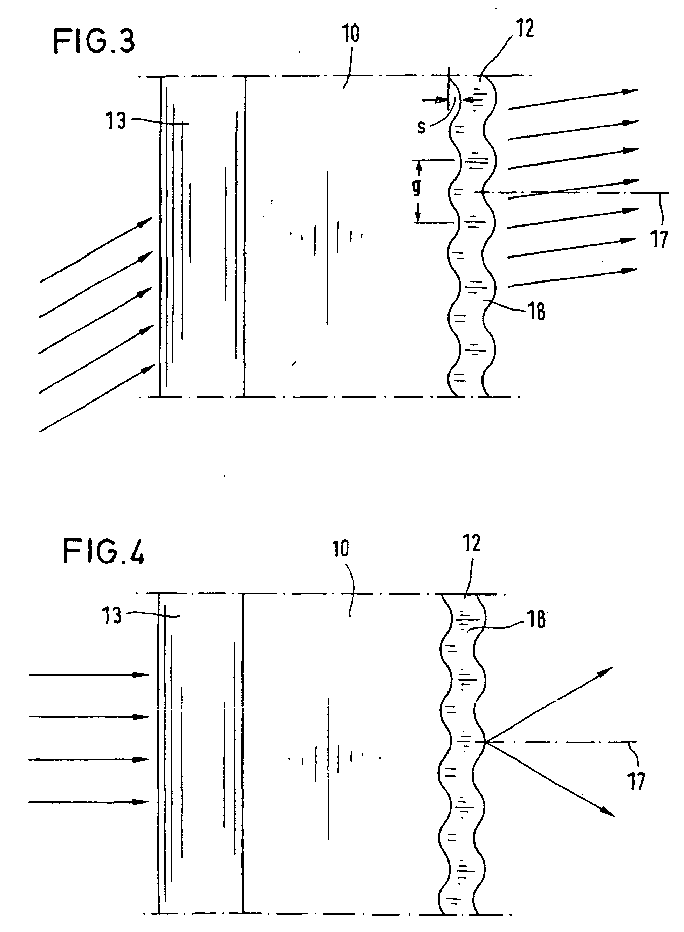

Fig. 3 zeigt eine Draufsicht der Platte 10, wobei das einfallende Licht schräg gegen die erste Stirnfläche 11 gerichtet ist. Das aus der zweiten Stirnfläche 12 austretende Licht ist zum Lot 17 hin gebrochen, d.h. sein Azimutwinkel (in bezug auf das Lot 17) ist kleiner als derjenige des einfallenden Lichts.

Diese Lichtwirkung wird durch die Profilierung 18 der Stirnfläche 12 erreicht. Die Profilierung 18 hat die Form eines Wellenbandes. Es handelt sich um eine harmonische Profilierung, d.h. die Profilierung hat den Verlauf einer Sinuswelle. Dabei beträgt die Periodenlänge g der Lichtwelle und die Amplitudenhöhe (von Spitzenwert zu Spitzenwert) s. Der Wert s/g beträgt ungefähr 0,8. g liegt zwischen 0,5 und 1,0 mm. Durch diese Bemessung der Stirnfläche 12 wird ein optimales Gleichgewicht zwischen Streuung und Umlenkung des Lichts in die Raumtiefe erreicht.

Fig. 4 zeigt die lichtstreuende Wirkung der Profilierung 18 in dem Fall, daß Licht senkrecht auf die Stirnfläche 11 auftrifft. In diesem Fall bewirkt die Profilierung 18 eine breite Streuung dieses Lichts nach beiden Seiten des Lots 17.

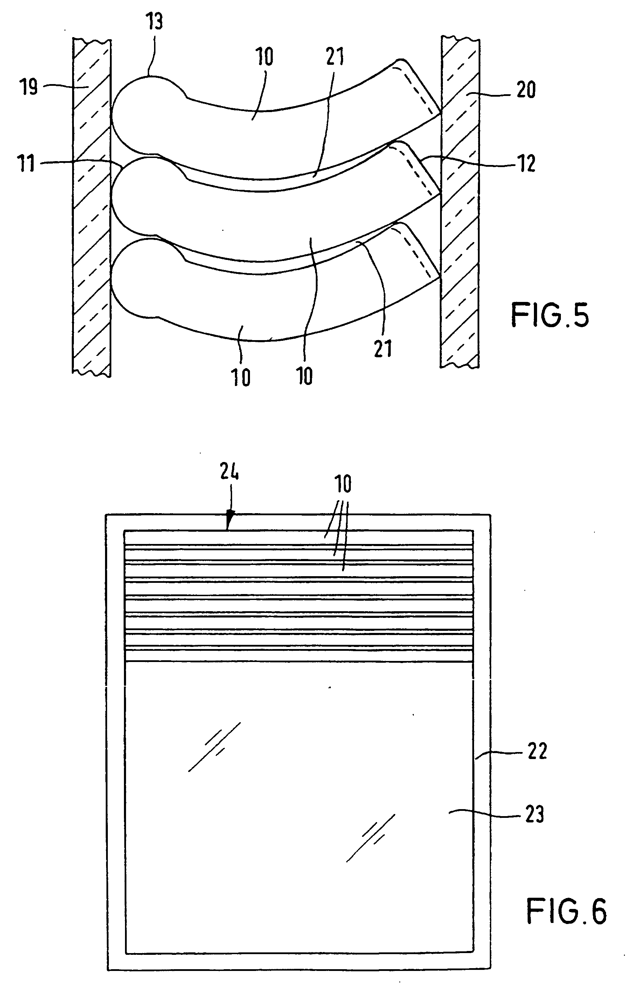

Fig. 5 zeigt die Anordnung mehrerer Platten 10, die übereinanderliegen und in direktem Kontakt miteinander stehen, zwischen zwei Scheiben 19,20. Benachbarte Platten 10 haben an ihren Stirnflächen 11,12 Punkt- oder Linienberühung miteinander, während im übrigen schmale Spalte 21 zwischen den Platten 10 gebildet sind, um die innere Reflexion einer Platte 10 nicht zu beeinträchtigen. Die Scheiben 19,20 dienen als Staubschutz und zum Positionierthalten der Platten 10.

In Fig. 6 ist ein Fenster 22 dargestellt, das im unteren Bereich eines durchsichtige Scheibe 23 enthält und darüber eine Beleuchtungsvorrichtung 24 aus übereinanderliegenden Platten 10. Die Beleuchtungsvorrichtung 24 dient hier als Oberlicht, das ständig dem Sonnenlicht ausgesetzt ist, während die Scheibe 23 mit einem (nicht dargestellten) Sonnenschutz abgeschattet werden kann.

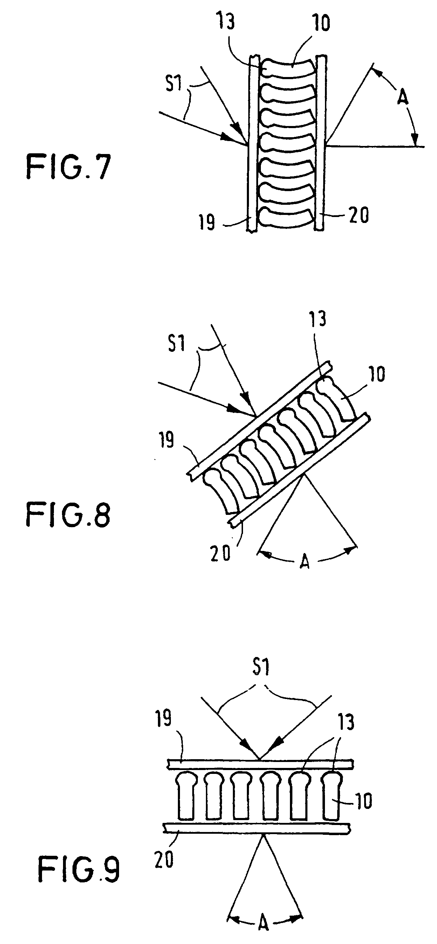

In den Fign. 7-8 sind unterschiedliche Einbausituationen der Tageslicht-Beleuchtungsvorrichtung im Vertikalschnitt dargestellt.

Fig. 7 zeigt die Tageslicht-Beleuchtungsvorrichtung in einer Außenwand eines Gebäudes. Dabei sind die Platten 10, wie bei dem ersten Ausführungsbeispiel, nach unten gebogen. S1 bezeichnet den Bereich der einfallenden Lichtstrahlung. Lichtstrahlung, die aus diesem Bereich einfällt, wird in den Lichtausfallsbereich A gestreut. Der Lichtausfallsbereich A ist schräg nach oben gerichtet.

In Fig. 8 ist der Fall dargestellt, daß die Tageslicht-Beleuchtungsvorrichtung in einem Schrägdach angeordnet ist. Die Platten 10 sind hierbei nach oben gewölbt. Dadurch entsteht für schräg von oben her einfallendes Licht S1 der nach unten gerichtete Lichtausfallsbereich A.

Fig. 9 zeigt den Fall eines Flachdachs. Die Platten 10 sind hierbei gerade, d.h. nicht gekrümmt, so daß der Lichtausfallsbereich A für die von oben her einfallende Lichtstrahlung S1 nach unten gerichtet ist.

## Patentansprüche

1. Tageslicht-Beleuchtungsvorrichtung bestehend aus mindestens einer lichtleitenden Platte (10), die mit einer ersten Stirnfläche (11) dem einfallenden Licht zugewandt und mit einer gegenüberliegenden zweiten Stirnfläche (12) dem zu beleuchtenden Raum zugewandt ist und zwischen diesen Stirnflächen (11,12) im Querschnitt dazu einen bogenförmigen oder geraden Verlauf aufweist,
**dadurch gekennzeichnet,**
**daß** die erste Stirnfläche (11) mit einer lichtbündelnden Krümmung (13) ausgebildet ist.

2. Tageslicht-Beleuchtungsvorrichtung nach Anspruch 1, **dadurch gekennzeichnet, daß** die Krümmung (13) in Form eines Teilzylinders ausgebildet ist.

3. Tageslicht-Beleuchtungsvorrichtung nach Anspruch 1 oder 2, **dadurch gekennzeichnet, daß** die zweite Stirnfläche (12) eine Profilierung (18) aufweist.

4. Tageslicht-Beleuchtungsvorrichtung nach Anspruch 3, **dadurch gekennzeichnet, daß** die Profilierung (18) die Form sinusförmiger Wellen aufweist.

5. Tageslicht-Beleuchtungsvorrichtung nach Anspruch 4, **dadurch gekennzeichnet, daß** die Profilierung (18) im Verhältnis von s/g zu ungefähr 0,8 ausgebildet ist, wobei s die Amplitudenhöhe und g die Periodenlänge der Wellen ist.

6. Tageslicht-Beleuchtungsvorrichtung mit mehreren lichtleitenden Platten nach einem der Ansprüche 1 bis 5, **dadurch gekennzeichnet, daß** die Platten (10) in Form eines Stapels in direktem Kontakt aneinanderliegen, wobei die Platten (10) so geformt sind, daß benachbarte Platten (10) miteinander punkt- oder linienförmige Berührung mit dazwischenliegenden Spalten (21) haben.

7. Tageslicht-Beleuchtungsvorrichtung mit mehreren lichtleitenden Platten nach einem der Ansprüche 1 bis 6, **dadurch gekennzeichnet, daß** die Platten (10) zwischen zwei durchsichtigen Scheiben (19,20) eingefaßt sind.

## Claims

1. Daylight illumination device comprising at least one light conducting plate (10), a first end face (11) thereof facing the incident light and an opposite second end face (12) facing the room to be illuminated, the plate having an arcuate or straight cross section between these end faces (11, 12),
**characterized in that**
the first end face (11) is formed with a light-concentrating curvature (13).

2. Daylight illumination device of claim 1, **characterized in that** the curvature (13) is formed as a cylinder section.

3. Daylight illumination device of claim 1 or 2, **characterized in that** the second end face (12) has a profile (18).

4. Daylight illumination device of claim 3, **characterized in that** the profile (18) is in the shape of sinusoidal waves.

5. Daylight illumination device of claim 4, **characterized in that** the profile (18) is formed with an s/g ratio of about 0.8, where s indicates the amplitude height and g indicates the period length of the waves.

6. Daylight illumination device with a plurality of light conducting plates of one of claims 1 to 5, **characterized in that** the plates (10) abut each other in direct contact in the form of a stack, the plates (10) being shaped such that adjacent plates (10) have a punctual or line contact with gaps (21) therebetween.

7. Daylight illumination device with a plurality of light conducting plates of one of claims 1 to 6, **characterized in that** the plates (10) are enclosed between two transparent panes (19, 20).

## Revendications

1. Dispositif d'éclairage diurne comprenant au moins une plaque conductrice de lumière (10) qui a une première surface frontale (11) tournée vers la lumière incidente et une seconde surface frontale (12) opposée tournée vers la pièce à éclairer et qui présente en coupe transversale un parcours en forme d'arc ou en ligne droite entre ces surfaces frontales (11, 12),
**caractérisé en ce que** :
la première surface frontale (11) est configurée avec une courbure (13) apte à focaliser la lumière.

2. Dispositif d'éclairage diurne selon la revendication 1,
**caractérisé en ce que**
la courbure (13) est configurée sous la forme d'une portion de cylindre.

3. Dispositif d'éclairage diurne selon la revendication 1 ou 2,
**caractérisé en ce que**
la seconde surface frontale (12) présente un profil (18).

4. Dispositif d'éclairage diurne selon la revendication 3,
**caractérisé en ce que**
le profil (18) a la forme d'une onde sinusoïdale.

5. Dispositif d'éclairage diurne selon la revendication 4,
**caractérisé en ce que**
le profil (18) est configuré avec un rapport s/g d'environ 0,8, dans lequel s est la grandeur d'amplitude et g la longueur de période des ondes.

6. Dispositif d'éclairage diurne comprenant plusieurs plaques conductrices de lumière selon l'une des revendications 1 à 5,
**caractérisé en ce que**
les plaques (10) reposent en contact direct les unes sur les autres sous la forme d'un empilement, les plaques (10) étant formées de telles sorte que les plaques adjacentes (10) sont en contact ponctuel ou linéaire entre elles avec des interstices (21) intercalés entre elles.

7. Dispositif d'éclairage diurne comprenant plusieurs plaques conductrices de lumière selon l'une des revendications 1 à 6,
**caractérisé en ce que**
les plaques (10) sont montées entre deux disques transparents (19, 20).
